# EUROPÄISCHE PATENTANMELDUNG

(11) **EP 1 002 999 A2**
(43) Veröffentlichungstag der Anmeldung: **24.05.2000**
(21) Anmeldenummer: 99122259.7
(22) Anmeldetag: 08.11.1999
(51) Int. Cl.: F23N 5/18

(54) **Regelung der Brennerheizleistung bei einem gasbetriebenen Koch- oder Backgerät**

(30) Priorität: 18.11.1998 DE 19853262
(71) Anmelder: BSH Bosch und Siemens Hausgeräte GmbH, 81669 München (DE)
(72) Erfinder: Rothenberger, Gerhard, 76571 Gaggenau (DE); Weiss, Dieter, 77815 Bühl (DE)

(57) **Zusammenfassung**

Bei einem Verfahren zum Einstellen des einer Brennerdüse (2) eines gasbetriebenen Koch- oder Backgerätes durch eine Gaszuleitung (3) zugeführten, für eine gewünschte Brennerheizleistung erforderlichen Gasvolumenstromes (Q) und bei einem entsprechenden Koch- oder Backgerät, insbesondere einem Gasherd, einem Gaskochfeld, einer Gaskochmulde oder einem Gasbackofen, mit einem Brenner (1), dessen Düse (2) an eine Gaszuleitung (3) angeschlossen ist, und einem in der Gaszuleitung (3) angeordneten Gasventil (4) wird die Genauigkeit und Reproduzierbarkeit der Einstellung des Gasvolumenstromes (Q) dadurch verbessert, daß der aktuelle Durchfluß (Ist-Meßwert) des Gases durch die Gaszuleitung (3) mittels einer Meßeinrichtung (6) erfaßt und mittels eines Reglers (7) und einer den Gasdurchfluß verändernden Stelleinrichtung (8) auf einen berechneten oder vorgegebenen, der gewünschten Brennerheizleistung entsprechenden Soll-Durchflußwert geregelt wird.

## Beschreibung

Die Erfindung betrifft ein Verfahren zum Einstellen des einer Brennerdüse eines gasbetriebenen Koch- oder Backgerätes durch eine Gaszuleitung zugeführten, für eine gewünschte Brennerheizleistung erforderlichen Gasvolumenstromes und ein entsprechendes Koch- oder Backgerät, insbesondere einen Gasherd, ein Gaskochfeld, eine Gaskochmulde oder einen Gasbackofen, mit einem Brenner, dessen Düse an eine Gaszuleitung angeschlossen ist, und einem in der Gaszuleitung angeordneten Gasventil.

Gebräuchliche gasbetriebene Koch- oder Backgeräte, beispielsweise Gasherde, Gaskochfelder, Gaskochmulden, Gasbacköfen, weisen einen oder mehrere Brenner auf, in denen Gas mit Luft vermischt und verbrannt wird. Als Brennstoff können Stadt- oder Erdgas, Flüssiggase (Butan, Propan) oder vergaste Flüssigkeiten (z.B. Benzin, Spiritus) dienen, wobei sich die Gasarten in ihrem Verbrennungsverhalten und ihrem Brennwert unterscheiden. Das jeweils verwendete Gas wird einer Versorgungseinrichtung, z.B. einem Gasversorgungsleitungsnetz, einer Gasflasche, einem Gastank oder -behälter, entnommen und dem Brenner über eine Gaszuleitung zugeführt.

Der Einspeisungsdruck des Gases gegenüber der Atmosphäre kann in Abhängigkeit von dem verwendeten Gassystem (d.h. der Art der Versorgungseinrichtung und der Art des verwendeten Gases) unterschiedlich sein. Aber auch innerhalb eines Systems kann der Gasdruck um mehrere mbar absinken oder ansteigen.

Der Brenner weist eine Brennerdüse auf, die beim Betrieb des Brenners den maßgeblichen, den ausströmenden Gasstrom begrenzenden Strömungswiderstand darstellt und somit den maximalen Gasvolumenstrom, d.h. die maximale Heizleistung des Brenners, bestimmt.

Zum Einstellen der gewünschten Brennerheizleistung wird nach dem Stand der Technik ein manuell oder elektromotorisch betätigbares proportionales Gasventil verwendet. Die Vorgabe, wie die Ventilstellung verändert werden soll, erfolgt mittels eines Anwahlorgans, beispielsweise durch Verdrehen eines Einstellknopfes oder Anwahl an einem Bedienfeld. Durch teilweises Öffnen bzw. Schließen des Gasventils wird der Gasdurchfluß durch die Gaszuleitung (d.h. der Gasvolumenstrom durch den Leitungsquerschnitt pro Zeiteinheit) verändert und damit die gewünschte Brennerheizleistung eingestellt.

Problematisch bei einem derartigen Gasventil ist, daß es eine Hysterese im Einsteilverhalten zeigt, d.h. daß der Gasdurchfluß bei gleicher Ventilstellung unterschiedlich ist in Abhängigkeit von der Länge des vorausgegangenen Verstellweges und der Richtung, in der das Ventil zum Einstellen des gewünschten Gasdurchflusses betätigt (d.h. geöffnet bzw. geschlossen) wird. Darüber hinaus kann sich das Regelverhalten des Gasventils teilweise erheblich ändern, je nachdem, welche Gasart verwendet wird bzw. welcher Brennertyp an die Gaszuleitung angeschlossen ist. Die Brennertypen unterscheiden sich beispielsweise in ihrer maximalen Heizleistung, in ihrer Düsenkonfiguration etc. Aus diesem Grunde müssen in der Regel die Brennerdüse und andere Teile ausgetauscht werden, wenn das Koch- oder Backgerät mit einer anderen Gasart und/oder einem anderen Brennertyp betrieben werden soll.

Aufgrund der Hysterese des Gasventils und Gasdruckschwankungen auf Seiten der Gasversorgungseinrichtung ist die Reproduzierbarkeit und Einstellgenauigkeit des Gasvolumenstromes sehr gering, wenn sich ein Benutzer des Koch- oder Backgeräts beim Einstellen der gewünschten Brennerheizleistung an einer dem Ventil zugeordneten Skala des Anwahlorganes orientiert. Mit Hilfe der Skala sind keine genau definierten Brennerheizleistungen anwählbar. Aus diesem Grunde achtet der Benutzer im allgemeinen nur flüchtig auf die Stellung des Anwahlorganes bzw. auf die Skala. Er verändert die Stellung des Ventils so lange, bis die gewünschte Brennerheizleistung erreicht ist, wobei er sich im wesentlichen an der Flammengröße und/oder dem Koch- bzw. Backverhalten der jeweiligen Speise orientiert.

Aus der DE 196 27 539 A1 sind ein Verfahren und eine Vorrichtung bekannt, um den einer Brennerdüse zugeführten Gasstrom in Stufen einzustellen. Dazu sind in der Gaszuleitung mehrere Drosselelemente in Reihe bzw. parallel angeordnet. Zum Ein- und Ausschalten der Funktion der jeweiligen Drosselelemente sind binäre Schaltelemente vorgesehen, die den Gasstrom durch das Drosselelement ein- und ausschalten können. Durch entsprechende Kombination bestimmter Schaltelemente in ein- bzw. aus-Stellung wird eine abgestufte Reduktion des Gasstromes durchgeführt.

In der EP 0 562 538 A2 werden zum Einstellen und Konstanthalten eines einer gewünschten Brennerheizleistung entsprechenden Gasvolumenstromes ein Verfahren und ein entsprechendes Gerät beschrieben. Bei diesen wird mittels eines Drucksensors der Druck des einer Brennerdüse zugeführten Gases gemessen und mittels eines Regelkreises auf einen vorbestimmten Wert gebracht bzw. auf diesem gehalten.

Der vorliegenden Erfindung liegt die Aufgabe zugrunde, ein Verfahren zum Einstellen des einer Brennerdüse eines gasbetriebenen Koch- oder Backgerätes durch eine Gaszuleitung zugeführten, für eine gewünschte Brennerheizleistung erforderlichen Gasvolumenstromes und ein entsprechendes Koch- oder Backgerät zur Verfügung zu stellen, mit dem bzw. bei dem die gewünschte Brennerheizleistung in hohem Maße reproduzierbar und mit hoher Genauigkeit einstellbar ist. Nach weiteren Aspekten ist wünschenswert, daß das Verfahren und das Koch- oder Backgerät zuverlässig arbeiten und technisch unaufwendig realisierbar sind.

Diese Aufgabe wird mit einem Verfahren zum Einstellen des einer Brennerdüse eines gasbetriebenen Koch- oder Backgerätes durch eine Gaszuleitung zugeführten, für eine gewünschte Brennerheizleistung erforderlichen Gasvolumenstromes, bei welchem der aktuelle Durchfluß (Ist-Meßwert) des Gases durch die Gaszuleitung mittels einer Meßeinrichtung erfaßt und mittels eines Reglers und einer den Gasdurchfluß verändernden Stelleinrichtung auf einen berechneten oder vorgegebenen, der gewünschten Brennerheizleistung entsprechenden Soll-Durchflußwert geregelt wird, gelöst.

Bei der erfindungsgemäßen Durchflußregelung werden Gasdruckschwankungen in der Gaszuleitung und Ventil-Hystereseerscheinungen erfaßt und ausgeglichen. Somit wird bei Vorgabe einer gewünschten Brennerheizleistung der erforderliche, der Brennerdüse zuzuführende Gasvolumenstrom in hohem Maße reproduzierbar und mit hoher Genauigkeit eingestellt. Der Gasdurchfluß und damit die Brennerheizleistung können kontinuierlich oder in reproduzierbaren, definierten Stufen geregelt werden. Auf diese Weise wird eine direkte, reproduzierbare Anwahl definierter Brennerheizleistungen bzw. Brennerheizleistungsstufen ermöglicht.

Die gewünschte Brennerheizleistung wird von dem Benutzer mittels eines an dem Koch- oder Backgerät vorhandenen Anwahlorganes vorgegeben, und der entsprechende Durchfluß mittels eines Regelkreises eingestellt. Mit dem erfindungsgemäßen Verfahren ist es darüber hinaus wie bei elektrisch betriebenen Koch- oder Backgeräten möglich, mittels einer geeigneten Steuerschaltung, die die jeweils einzustellende Brennerheizleistung vorgibt, Koch- oder Backprozesse automatisch zu steuern.

Die Durchflußmessung bzw. -regelung hat gegenüber der bekannten, oben beschriebenen Druckmessung bzw. -regelung den Vorteil, daß das von dem Brenner verbrauchte Gasvolumen direkt und nicht nur eine damit korrespondierende Größe erfaßt wird, was zu einer höheren Einstellgenauigkeit der Brennerheizleistung führt. Weiterhin ist vorteilhaft, daß bei der Durchflußmessung im Unterschied zu der Druckmessung ohne eine zusätzliche Maßnahme zugleich erfaßt wird, ob überhaupt eine Gasströmung vorhanden ist. Auf diese Weise werden der Zustand der Düse und der Gaszuleitung überwacht; eine Fehlfunktion, z.B. eine Verstopfung der Düse, wird frühzeitig erkannt.

Gegenüber dem aus der DE 196 27 539 A1 bekannten, oben beschriebenen Stand der Technik können mit dem erfindungsgemäßen Verfahren auch Druckschwankungen in der Gaszuleitung ausgeglichen werden. Darüber hinaus ist das erfindungsgemäße Verfahren mit einem geringeren konstruktiven Aufwand durchführbar.

Grundsätzlich kann im Rahmen des erfindungsgemäßen Verfahrens jede Meßmethode eingesetzt werden, die geeignet ist, den Durchfluß genau und zuverlässig zu erfassen.

Gemäß einer ersten vorteilhaften Variante das Verfahrens mißt die Meßeinrichtung den Gasdurchfluß über die Erfassung einer in der Gaszuleitung auftretenden Druckdifferenz. Dieser Methode liegen die Gesetze strömender Flüssigkeiten zugrunde, die für strömende Gase ebenfalls anwendbar sind, solange die Strömungsgeschwindigkeit deutlich unter der Schallgeschwindigkeit bleibt, d.h. die Gase als inkompressibel angesehen werden können, was bei einem gasbetriebenen Koch- oder Backgerät der Fall ist. In einer Gasströmung existieren zwei im vorliegenden Fall relevante Druckarten: der quer zur Strömungsrichtung wirkende statische Druck und der in Strömungsrichtung wirkende Staudruck, deren Summe (Gesamtdruck) konstant ist (Gesetz von Bernoulli). Mit Hilfe einer geeigneten Meßanordnung kann beispielsweise durch eine entsprechende Differenzdruckmessung im strömenden Gas bzw. durch Erfassung einer Druckdifferenz zwischen ruhendem und strömendem Gas zuverlässig der Gasdurchfluß gemessen werden.

In einer zweiten vorteilhaften Variante des Verfahrens mißt die Meßeinrichtung den Gasdurchfluß über eine Erfassung der Abkühlung eines in der Gaszuleitung angeordneten - vorzugsweise beheizbaren - Temperatursensors.

Gemäß einer dritten vorteilhaften Variante des Verfahrens mißt die Meßeinrichtung den Gasdurchfluß über die Erfassung der Geschwindigkeit des in der Gaszuleitung strömenden Gases.

Gemäß einer vorteilhaften Ausführung der Erfindung wird vorgeschlagen, daß der Regler den Gasdurchfluß in Abhängigkeit von der Gasart und/oder von dem Brennertyp regelt, indem er an die jeweils verwendete Gasart und/oder den jeweils verwendeten Brennertyp angepaßt wird. Für die korrekte Durchflußregelung sind dem Regler entweder von dem Herstellungswerk mehrere Regeldatensätze vorgegeben, die jeweils den erforderlichen Durchfluß in Abhängigkeit von der Brennerheizleistung für eine Gasart und/oder einen Brennertyp beschreiben, oder es wird ein Regler verwendet, der den gewünschten Brennerheizleistungen entsprechende Soll-Durchflußwerte in Abhängigkeit von der Gasart und/oder dem Brennertyp berechnet. Mit dem vorgegebenen oder berechneten Soll-Durchflußwert und dem gemessenen Ist-Meßwert ermittelt der Regler gasart- bzw. brennertypspezifische Stellgrößen, mit denen die Stelleinrichtung angesteuert wird. Auf diese Weise kann mit einer Brennerdüse, einem Regler und einer Stelleinrichtung der Durchfluß bei Verwendung unterschiedlicher Gasarten und/oder Brennertypen geregelt werden. Das Regelverfahren kann somit für unterschiedliche Brennertypen und/oder Gasarten innerhalb eines Koch- oder Backgerätes bzw. für unterschiedliche Gerätetypen eingesetzt werden. Die Anpassung des Reglers kann von Hand vorgenommen werden oder selbständig mit Hilfe geeigneter Sensoren erfolgen.

Umgebungsstörfaktoren, beispielsweise Lufttemperatur, Luftfeuchtigkeit, Luftdruck etc., können die Thermodynamik der Verbrennungsreaktion des Gases beeinflussen, was sich auf die Genauigkeit und Reproduzierbarkeit der Einstellung des Gasvolumenstromes auswirkt. Gemäß einer vorteilhaften Weiterbildung des erfindungsgemäßen Verfahrens wird daher vorgeschlagen, daß mindestens ein die Brennerheizleistung beeinflussender Umgebungsstörfaktor erfaßt und bei der Regelung des Durchflusses berücksichtigt wird. Auf diese Weise wird erreicht, daß das Verfahren auch in unterschiedlichen klimatischen Bereichen, bei einer Veränderung der Wetterlage usw. (d.h. bei orts- bzw. zeitabhängigen Änderungen der Umweltbedingungen) zuverlässig abläuft.

Die oben genannte Aufgabe wird ebenfalls durch ein Koch- oder Backgerät, insbesondere einen Gasherd, ein Gaskochfeld, eine Gaskochmulde oder einen Gasbackofen, mit einem Brenner, dessen Düse an eine Gaszuleitung angeschlossen ist, einem in der Gaszuleitung angeordneten Gasventil und einer Regelvorrichtung, insbesondere zur Durchführung des erfindungsgemäßen Verfahrens, gelöst. Dabei weist die Regelvorrichtung eine an die Gaszuleitung angeschlossene, den aktuellen Durchfluß (Ist-Meßwert) des Gases durch die Gaszuleitung erfassende Meßeinrichtung, einen Regler zum Vergleichen des Ist-Meßwertes mit einem vorbestimmten, der gewünschten Brennerheizleistung entsprechenden Soll-Durchflußwert und zum Ermitteln einer Stellgröße sowie eine Stelleinrichtung zum Verändern des Gasdurchflusses durch die Gaszuleitung in Abhängigkeit von der zugeführten Stellgröße auf.

Durch das Vorsehen einer konstruktiv unaufwendigen Durchfluß-Regelvorrichtung ist der für eine gewünschte Brennerheizleistung erforderliche Gasvolumenstrom in hohem Maße reproduzierbar und mit hoher Genauigkeit einstellbar.

In einer bevorzugten Ausführungsform des erfindungsgemäßen Geräts umfaßt die Stelleinrichtung das in der Gaszuleitung angeordnete Gasventil. Auf diese Weise wird der konstruktive Aufwand der Regelvorrichtung reduziert. Alternativ könnte die Stelleinrichtung auch einen separaten, in der Gaszuleitung angeordneten, veränderbaren Strömungswiderstand aufweisen, der zusätzlich zu dem Gasventil vorgesehen ist. Das Gasventil ist vorzugsweise als kontinuierlich oder in vorbestimmten Stufen öffnen- oder schließbares Ventil, vorteilhafterweise als elektromotorisch, elektromagnetisch oder piezoelektrisch betriebenes Ventil, ausgebildet. Derartige Ventile arbeiten zuverlässig und lassen sich sehr genau einstellen.

Um das Koch- oder Backgerät wahlweise mit unterschiedlichen Gasarten und/oder verschiedenen Brennertypen betreiben zu können, weist die Regelvorrichtung vorzugsweise einen an die Regelung des Durchflusses bei unterschiedlichen Gasarten und/oder unterschiedlichen Brennertypen anpaßbaren Regler auf. Damit der Durchfluß gasart- bzw. brennertypabhängig regelbar ist, sind dem Regler von dem Herstellungswerk Regeldatensätze für unterschiedliche Gasarten und/oder Brennertypen vorgegeben, oder es wird ein Reglertyp verwendet, der in Abhängigkeit von der jeweiligen Gasart und/oder dem jeweiligen Brennertyp die erforderlichen Größen, insbesondere Soll-Durchflußwert und Stellgröße, berechnet.

Mit einem anpaßbaren Regler wird der Vorteil erzielt, daß bei einem Wechsel der Gasart und/oder des Brennertyps - der z.B. aufgrund eines Umzuges, einer Reise (z.B. Gaskochgerät in einem Campingbus) oder einer Nutzungsänderung (Verwendung eines Haushaltsgerätes in einer Großküche) nötig sein kann - keine arbeitsaufwendige Auswechslung der Brennerdüse und/oder von Teilen der Regelvorrichtung, z.B. Regler und/oder Stelleinrichtung, durch einen geschulten Kundendiensttechniker erforderlich ist.

Bei einer vorteilhaften, einen geringen konstruktiven Aufwand erfordernden Ausführungsform des erfindungsgemäßen Geräts wird der Regler manuell, beispielsweise durch Umlegen eines Schalters oder Setzen eines Jumpers, angepaßt, d.h. dem Regler wird der für Gasart und Brennertyp erforderliche Regeldatensatz vorgegeben. Die Anpassung kann im Herstellungswerk, durch einen Kundendiensttechniker oder von dem Benutzer durchgeführt werden. Bei einer bevorzugten weiteren Ausführungsform des erfindungsgemäßen Geräts weist die Regelvorrichtung einen die Zusammensetzung des Gases erfassenden, mit dem in der Gaszuleitung befindlichen Gas in Kontakt bringbaren Gassensor und/oder einen den Brennertyp erkennenden Brenner-Sensor auf. Der Gassensor ist beispielsweise in der Gaszuleitung oder einem Bypass angeordnet. Mittels der von den Sensoren erzeugten, dem Regler zugeführten Signale findet der Regler den richtigen Regeldatensatz bzw. berechnet die erforderlichen Größen. Bei dieser Ausführung ist die Gefahr einer Fehleinstellung des Reglers reduziert.

Um die Brennerheizleistung auch bei orts- bzw. zeitabhängigen Änderungen der Umweltbedingungen (z.B. Lufttemperatur, -feuchtigkeit, -druck) reproduzierbar und genau einstellen zu können, weist die Regelvorrichtung vorteilhafterweise einen Sensor auf, mit dem ein die Brennerheizleistung beeinflussender Umgebungsstörfakor erfaßbar ist. Vorteilhafterweise können mehrere Sensoren vorgesehen sein, um unterschiedliche Störfaktoren zu erfassen. Die erfaßten Störfaktoren werden von dem Regler bei der Durchflußregelung berücksichtigt, wodurch eine höhere Genauigkeit und Reproduzierbarkeit der Heizleistungseinstellung erzielt wird.

Die folgenden Ausführungsbeispiele der Erfindung lassen weitere vorteilhafte Merkmale und Besonderheiten erkennen, die anhand der schematischen Darstellungen in den Zeichnungen im folgenden näher beschrieben und erläutert werden.

Es zeigen:
- Fig. 1: eine Prinzip-Skizze eines erfindungsgemäßen Gerätes,
- Fig. 2: eine erste Ausführung einer Durchfluß-Meßeinrichtung in schematischer Darstellung,
- Fig. 3: eine zweite Ausführung einer Durchfluß-Meßeinrichtung in schematischer Darstellung,
- Fig. 4: eine dritte Ausführung einer Durchfluß-Meßeinrichtung in schematischer Darstellung,
- Fig. 5: eine vierte Ausführung einer Durchfluß-Meßeinrichtung in schematischer Darstellung,
- Fig. 6: eine fünfte Ausführung einer Durchfluß-Meßeinrichtung in schematischer Darstellung und
- Fig. 7: ein Blockschaltbild eines Regelkreises zur erfindungsgemäßen Durchflußregelung.

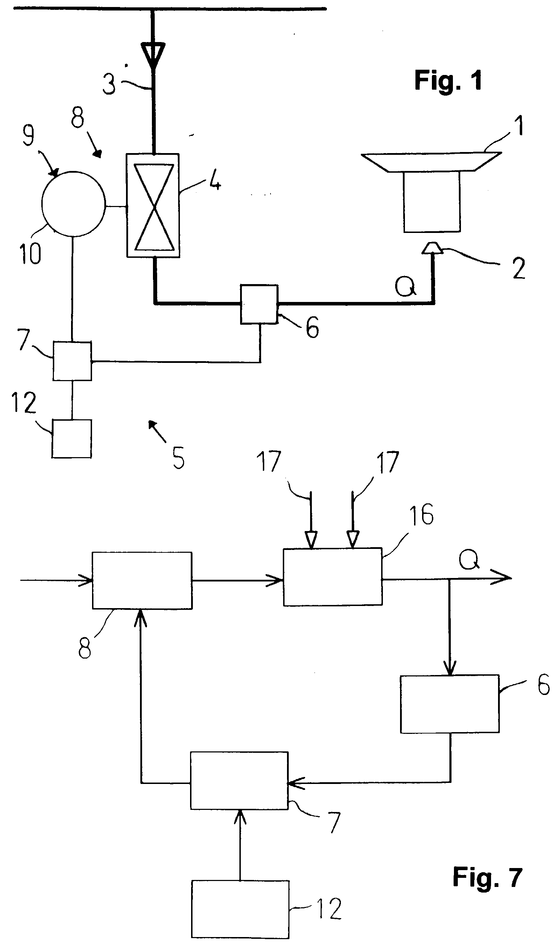

Fig. 1 zeigt einen beispielsweise in einen Gaskochherd eingebauten Brenner 1, dessen Düse 2 an eine Gaszuleitung 3 angeschlossen ist, die von einer Gasversorgungseinrichtung versorgt wird. In der Gaszuleitung 3 ist ein Gasventil 4 angeordnet, um einen der Brennerdüse 2 zugeführten Gasvolumenstrom Q zu verändern. Ferner ist eine Regelvorrichtung 5 zu erkennen.

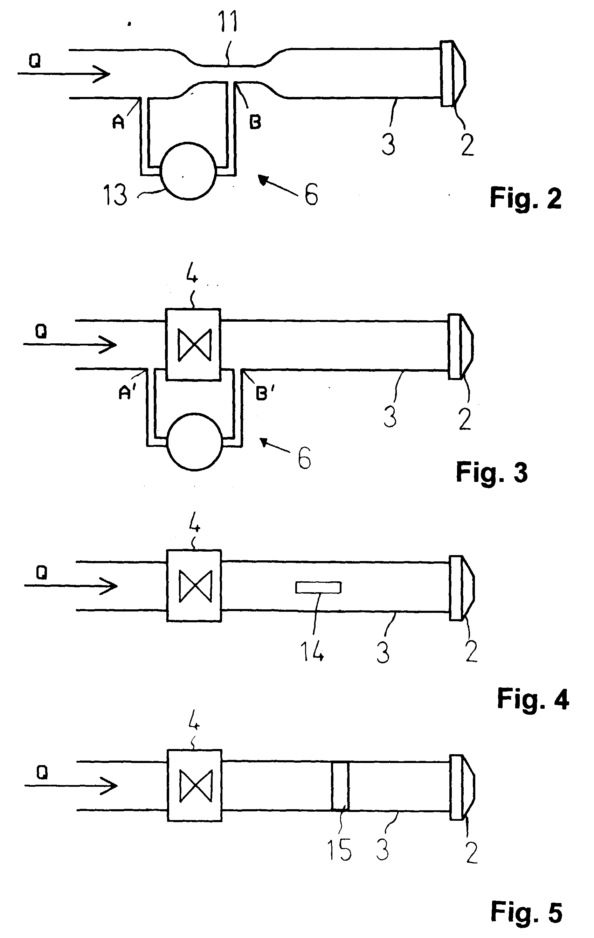

Die Regelvorrichtung 5 umfaßt eine an die Gaszuleitung 3 angeschlossene, den aktuellen Durchfluß (Ist-Meßwert) des Gases durch die Gaszuleitung 3 erfassende Meßeinrichtung 6, die hierfür einen geeigneten Durchflußsensor aufweist. Als Durchflußsensor kann grundsätzlich jeder Sensor dienen, mit dem eine von der Strömung des Gases abhängige Größe meßbar ist. Die Durchfluß-Meßeinrichtung 6 wird weiter unten anhand der Figuren 2 bis 6 detaillierter beschrieben.

Ferner weist die Regelvorrichtung 5 einen Regler 7 zum Vergleichen des Ist-Meßwertes mit einem vorbestimmten, der gewünschten Brennerheizleistung entsprechenden Soll-Durchflußwert und zum Ermitteln einer Stellgröße auf. Im Rahmen der Erfindung kann grundsätzlich jeder Regler eingesetzt werden, der geeignet ist, den Gasdurchfluß mit hoher Genauigkeit auf einen Soll-Durchflußwert einzuregeln. Beispielsweise kann ein Regler verwendet werden, der einen Mikroprozessor und einen nichtflüchtigen Speicher (z.B. ROM, PROM oder EPROM) aufweist, wobei in dem Speicher ein Regeldatensatz gespeichert ist, in dem vorgegebenen Brennerheizleistungen entsprechende Soll-Gasdurchflußwerte zugeordnet sind; der Regeldatensatz beschreibt also den Soll-Gasdurchfluß in Abhängigkeit von der Brennerheizleistung (Regelkurve) für die verwendete Gasart und den an die Gaszuleitung angeschlossenen Brennertyp.

Darüber hinaus ist eine Stelleinrichtung 8 zum Verändern des Gasdurchflusses durch die Gaszuleitung 3 in Abhängigkeit von der zugeführten Stellgröße ein Bestandteil der Regelvorrichtung 5. Die Stelleinrichtung 8 umfaßt das in der Gaszuleitung angeordnete elektromotorische Gasventil 4 und einen elektrischen Stellmotor 10 als Stellantrieb 9. Dieser wird von dem Regler 7 mit der Stellgröße angesteuert und öffnet oder schließt das Gasventil 4 entsprechend.

Durch Betätigen eines Anwahlorganes 12 des Koch- oder Backgerätes, das den Sollwertgeber der Regelvorrichtung 5 bildet, sind dem Regler 7 gewünschte Brennerheizleistungen (Führungsgrößen) vorgebbar. Die Anwahl der gewünschten Heizleistung kann dabei konventionell über einen Einstellknopf oder über ein Bedienfeld mit Stufenanwahl durchgeführt werden.

Nicht dargestellt sind die üblichen Sicherheitselemente, die beim Erlöschen der Flamme den Gasvolumenstrom Q unterbrechen.

In den Figuren 2 bis 6 sind verschiedene Ausführungen einer Durchfluß-Meßeinrichtung 6 schematisch dargestellt.

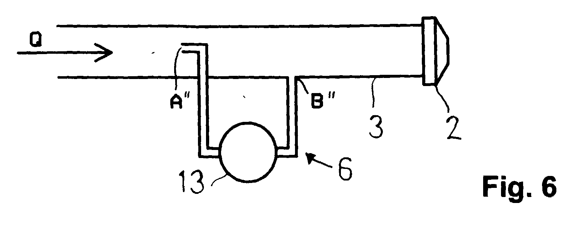

Die in den Figuren 2, 3 und 6 zu erkennende Meßeinrichtung 6 ist jeweils derart ausgebildet, daß eine strömungsbedingte Druckdifferenz in der Gaszuleitung 3 erfaßbar ist. Dazu weist die Gaszuleitung 3 in der in Fig. 2 zu erkennenden Ausführung eine Strömungsquerschnittsverengung 11 auf, ist also als Venturi-Rohr ausgebildet. Die Meßeinrichtung 6 weist einen Differenzdrucksensor 13 auf, der in einer an sich bekannten Weise eine Differenz des statischen Drucks zwischen zwei Meßstellen A und B mit unterschiedlichen Strömungsquerschnitten mißt. Die Strömungsquerschnittsverengung 11 kann auch in einer anderen Form realisiert sein, z.B. als in der Gaszuleitung 3 eingebaute Düse oder Blende. Bei der in Fig. 3 dargestellten Ausführung wird an der Meßstelle A' der Gesamtdruck bei geschlossenem Gasventil 4 gemessen. Bei einem entsprechend der Vorgabe des Regelkreises geöffneten Gasventil 4 wird an der Meßstelle B' der statische Druck gemessen. Durch Erfassung der Differenz - die Differenz entspricht dem Staudruck - ist der Gasdurchfluß meßbar. Die Ausführung in Fig. 6 zeigt eine Meßanordnung nach dem Staudruckprinzip (Prandtlsches Staurohr). Ein Differenzdrucksensor 13 der Meßeinrichtung 6 erfaßt hier die Differenz zwischen dem Gesamtdruck an der Meßstelle A'' und dem statischen Druck an der Meßstelle B'', also den Staudruck. Über die Erfassung des Staudrucks ist der Gasdurchfluß meßbar. Selbstverständlich sind weitere an sich bekannte Meßanordnungen zum Messen von Gasdruckdifferenzen im Rahmen der Erfindung einsetzbar.

Die Meßeinrichtung 6 in Fig. 4 weist einen in der Gaszuleitung 3 angeordneten Temperatursensor 14 auf, bei dem es sich beispielsweise um ein Kaltleiterelement handelt, dessen Widerstand sich in Abhängigkeit von seiner Temperatur ändert. Der Temperatursensor 14 wird von einer nicht dargestellten Heizeinheit erwärmt. Das über seine Oberfläche strömende Gas kühlt ihn um so stärker ab, je größer der Durchfluß ist. Über die Erfassung des Sensorwiderstandes wird die Abkühlung des Temperatursensors 14 und damit der Gasdurchfluß gemessen. Alternativ könnte der erwärmte Temperatursensor 14 von der Heizeinheit auf einer konstanten Temperatur gehalten und über den dafür benötigten Energieverbrauch der Durchfluß erfaßt werden. Der Temperatursensor 14 kann selbstverständlich auch auf eine andere Art und Weise angeordnet sein, beispielsweise in einem Bypass der Gaszuleitung 3.

Die in Fig. 5 zu erkennende Meßeinrichtung 6 weist in der Gaszuleitung 3 ein Geschwindigkeitsmeßelement 15 auf. Bei diesem handelt es sich beispielsweise um ein Flügelrad, das von dem strömenden Gas in Drehung versetzt wird. Der Strömungsquerschnitt an der Meßstelle ist bekannt. Über die Messung der Drehfrequenz wird die Strömungsgeschwindigkeit und damit der Durchfluß erfaßt. Alternativ könnte das Geschwindigkeitsmeßelement 15 beispielsweise als quer zur Strömungsrichtung angeordnetes Strömungsplättchen ausgebildet sein, dessen strömungsbedingte, durchflußabhängige Auslenkung von der Meßeinrichtung 6 erfaßt wird. Das Geschwindigkeitsmeßelement 15 kann auch in einem Bypass der Gaszuleitung 3 oder auf eine andere Art und Weise angeordnet sein.

Neben den beschriebenen Ausführungen können im Rahmen der Erfindung auch andere bekannte Durchflußmeßanordnungen eingesetzt werden, z.B. Schwebekörper-Durchflußmesser, Gasvolumenzähler etc.

Fig. 7 beschreibt den Ablauf des erfindungsgemäßen Verfahrens. Der Durchfluß (Ist-Meßwert) des der Brennerdüse 2 bei einer bestimmten Stellung des Gasventils 4 der Stelleinrichtung 8 zugeführten Gases wird von der Meßeinrichtung 6 gemessen und in ein entsprechendes elektrisches Signal umgewandelt, das dem Regler 7 zugeführt wird. Über das Anwahlorgan 12 ist dem Regler 7 ein einzuregelnder Soll-Durchflußwert, d.h. die gewünschte Brennerheizleistung (Führungsgröße) vorgegeben. Der Regler 7 vergleicht den Ist-Meßwert mit dem vorgegebenen Soll-Durchflußwert. Weichen die Werte voneinander ab, wird aus der Abweichung eine Stellgröße gebildet, die dem Stellmotor 10 der Stelleinrichtung 8 zugeführt wird. Dieser verstellt das Gasventil 4 entsprechend der Stellgröße, wodurch der Gasdurchfluß durch die Gaszuleitung 3 verändert wird.

Auf die Regelstrecke 16, die die gesamte Gaszuleitung 3 innerhalb des Koch- oder Backgerätes einschließlich der Brennerdüse 2 umfaßt, wirken durch Pfeile symbolisierte Störgrößen 17 (Gasdruckschwankungen, Ventil-Hysterese etc.) ein. Diese werden bei der Durchflußmessung erfaßt und durch den Regelkreis ausgeglichen. Wenn beispielsweise der Gasdruck in der Gaszuleitung 3 sinkt oder sich die Brennerdüse 2 allmählich zusetzt, wird bei gleich bleibender Ventilstellung ein entsprechend niedrigerer Gasdurchfluß gemessen, was zur Folge hat, daß das Gasventil 4 über den Regelkreis entsprechend weiter geöffnet wird, um den für die gewünschte Brennerheizleistung erforderlichen Soll-Durchflußwert einzustellen.

Wenn die gewünschte Brennerheizleistung geändert werden soll, wird dem Regler 7 über das Anwahlorgan 12 ein neuer Soll-Durchflußwert vorgegeben und der Durchfluß durch die Gaszuleitung 3 entsprechend eingeregelt.

Bei dem Verfahren wird zugleich die Funktionsfähigkeit der Brennerdüse 2 überwacht. Wenn sich diese zugesetzt hat, ist kein Durchfluß meßbar, was mittels einer geeigneten Schaltung beispielsweise zu einer automatischen Abschaltung des Koch- oder Backgeräts führen kann.

Durch die Durchfluß-Regelvorrichtung ist der für eine gewünschte Brennerheizleistung erforderliche Gasvolumenstrom Q mittels bekannter und handelsüblicher Bauteile in hohem Maße reproduzierbar und mit hoher Genauigkeit einstellbar. Dadurch wird ein elektronisch gesteuertes, gasbetriebenes Gerät mit kontinuierlicher Anwahl definierter Heizlelstungen oder mit Anwahl definierter Heizleistungsstufen (z.B. Stufen von 0 bis 9) geschaffen, wie es der Benutzer bei elektrisch betriebenen Koch- oder Backgeräten gewohnt ist. In dem Brenner werden durch die Durchflußregelung definierte, reproduzierbare Gas/Luft-Gemische erzeugt. Es ist somit möglich, auch mit einem nicht maximalen Gasvolumenstrom ein zündfähiges Gas/Luft-Gemisch einzustellen. Dadurch wird die Gaszündung verbessert.

### Bezugszeichenliste

- 1: Brenner
- 2: Brennerdüse
- 3: Gaszuleitung
- 4: Gasventil
- 5: Regelvorrichtung
- 6: Meßeinrichtung
- 7: Regler
- 8: Stelleinrichtung
- 9: Stellantrieb
- 10: Stellmotor
- 11: Strömungsquerschnittsverengung
- 12: Anwahlorgan
- 13: Differenzdrucksensor
- 14: Temperatursensor
- 15: Geschwindigkeitsmeßelement
- 16: Regelstrecke
- 17: Störgröße
- Q: Gasvolumenstrom
- A, B: Meßstellen
- A', B': Meßstellen
- A'', B'': Meßstellen

## Patentansprüche

1. Verfahren zum Einstellen des einer Brennerdüse (2) eines gasbetriebenen Koch- oder Backgerätes durch eine Gaszuleitung (3) zugeführten, für eine gewünschte Brennerheizleistung erforderlichen Gasvolumenstromes (Q), bei welchem der aktuelle Durchfluß (Ist-Meßwert) des Gases durch die Gaszuleitung (3) mittels einer Meßeinrichtung (6) erfaßt und mittels eines Reglers (7) und einer den Gasdurchfluß verändernden Stelleinrichtung (8) auf einen berechneten oder vorgegebenen, der gewünschten Brennerheizleistung entsprechenden Soll-Durchflußwert geregelt wird.

2. Verfahren nach Anspruch 1, dadurch gekennzeichnet, daß die Meßeinrichtung (6) den Gasdurchfluß über die Erfassung einer in der Gaszuleitung (3) auftretenden Druckdifferenz mißt.

3. Verfahren nach Anspruch 1, dadurch gekennzeichnet, daß die Meßeinrichtung (6) den Gasdurchfluß über die Erfassung der Abkühlung eines in der Gaszuleitung (3) angeordneten -vorzugsweise beheizbaren - Temperatursensors (14) mißt.

4. Verfahren nach Anspruch 1, dadurch gekennzeichnet, daß die Meßeinrichtung (6) den Gasdurchfluß über die Erfassung der Geschwindigkeit des in der Gaszuleitung (3) strömenden Gases mißt.

5. Verfahren nach einem der vorhergehenden Ansprüche, dadurch gekennzeichnet, daß der Regler (7) den Gasdurchfluß in Abhängigkeit von der Gasart und/oder dem Brennertyp regelt, indem er an die jeweils verwendete Gasart und/oder den jeweils verwendeten Brennertyp angepaßt wird.

6. Verfahren nach einem der vorhergehenden Ansprüche, dadurch gekennzeichnet, daß mindestens ein die Brennerheizleistung beeinflussender Umgebungsstörfaktor erfaßt und bei der Regelung des Durchflusses berücksichtigt wird.

7. Koch- oder Backgerät, insbesondere Gasherd, Gaskochfeld, Gaskochmulde oder Gasbackofen, mit einem Brenner (1), dessen Düse (2) an eine Gaszuleitung (3) angeschlossen ist, einem in der Gaszuleitung (3) angeordneten Gasventil (4) und einer Regelvorrichtung (5), insbesondere zur Durchführung eines Verfahrens nach einem der Ansprüche 1 bis 6, wobei die Regelvorrichtung (5) eine an die Gaszuleitung (3) angeschlossene, den aktuellen Durchfluß (Ist-Meßwert) des Gases durch die Gaszuleitung (3) erfassende Meßeinrichtung, einen Regler (7) zum Vergleichen des Ist-Meßwertes mit einem vorbestimmten, der gewünschten Brennerheizleistung entsprechenden Soll-Durchflußwert und zum Ermitteln einer Stellgröße und eine Stelleinrichtung (8) zum Verändern des Gasdurchflusses durch die Gaszuleitung (3) in Abhängigkeit von der zugeführten Stellgröße aufweist.

8. Gerät nach Anspruch 7, dadurch gekennzeichnet, daß die Meßeinrichtung (6) derart ausgebildet ist, daß eine strömungsbedingte Druckdifferenz in der Gaszuleitung (3) erfaßbar ist.

9. Gerät nach Anspruch 8, dadurch gekennzeichnet, daß die Gaszuleitung (3) eine Strömungsquerschnittsverengung (11) und die Meßeinrichtung einen Differenzdrucksensor (13) zum Messen einer Differenz des statischen Drucks zwischen zwei Meßstellen (A, B) mit unterschiedlichen Strömungsquerschnitten aufweisen.

10. Gerät nach Anspruch 7, dadurch gekennzeichnet, daß die Meßeinrichtung (6) einen - vorzugsweise beheizbaren -Temperatursensor (14) aufweist.

11. Gerät nach Anspruch 7, dadurch gekennzeichnet, daß die Meßeinrichtung ein Geschwindigkeitsmeßelement (15) aufweist.

12. Gerät nach einem der vorhergehenden Ansprüche, dadurch gekennzeichnet, daß die Stelleinrichtung (8) das Gasventil (4) umfaßt.

13. Gerät nach einem der vorhergehenden Ansprüche, dadurch gekennzeichnet, daß das Gasventil (4) als kontinuierlich oder in vorbestimmten Stufen öffnen- oder schließbares Ventil, vorzugsweise als elektromotorisch, elektromagnetisch oder piezoelektisch betriebenes Ventil, ausgebildet ist.

14. Gerät nach einem der vorhergehenden Ansprüche, dadurch gekennzeichnet, daß der Regler (7) an die Regelung des Durchflusses bei unterschiedlichen Gasarten und/oder unterschiedlichen Brennertypen anpaßbar ist.

15. Gerät nach Anspruch 14, dadurch gekennzeichnet, daß die Regelvorrichtung (5) einen die Zusammensetzung des Gases erfassenden, mit dem in der Gaszuleitung (3) befindlichen Gas in Kontakt bringbaren Gassensor und/oder einen den Brennertyp erkennenden Brenner-Sensor aufweist.

16. Gerät nach einem der vorhergehenden Ansprüche, dadurch gekennzeichnet, daß die Regelvorrichtung (5) einen Sensor aufweist, mit dem ein die Brennerheizleistung beeinflussender Umgebungsstörfakor erfaßbar ist.
